# EUROPÄISCHE PATENTANMELDUNG

(11) **EP 2 990 709 A1**
(43) Veröffentlichungstag der Anmeldung: **02.03.2016**
(21) Anmeldenummer: 15179705.7
(22) Anmeldetag: 04.08.2015
(51) Int. Cl.: F16L 37/14, F16N 25/02, F16L 39/04, F16L 47/18, F16L 47/24

(54) **VERBINDUNGSANORDNUNG FÜR EINE MEDIENFÜHRENDE LEITUNG SOWIE VERFAHREN ZUM VERBINDEN EINER MEDIENFÜHRENDEN LEITUNG**

(30) Priorität: 27.08.2014 DE 102014217019
(71) Anmelder: SKF Lubrication Systems Germany GmbH, 69190 Walldorf (DE)
(72) Erfinder: Kreutzkämper, Jürgen, 74915 Waibstadt-Daisbach (DE); Schmidt, Fabian, 14979 Großbeeren (DE); Schmidt, Holger, 14532 Klein-Manchow (DE); Schönherr, Dieter, 14979 Kleinbeeren (DE)
(74) Vertreter: Kuhstrebe, Jochen

(57) **Zusammenfassung**

Ausführungsbeispiele betreffen eine Verbindungsanordnung (100) für eine medienführende Leitung. Die umfasst ein Gehäuse (1-a) aus einem ersten Material mit wenigstens einer Bohrung (103) und ein Anschlussteil (102), welches zumindest abschnittsweise hülsenförmig ausgebildet ist. Das Anschlussteil (102) ist aus einem zweiten Material hergestellt, welches sich von dem ersten Material unterscheidet. Das Anschlussteil (102) ist drehbar in die Bohrung (103) des Gehäuses (1-a) eingesetzt ist, sodass das Gehäuse (1-a) und das Anschlussteil (102) bezüglich des Mediums dichtend verbunden sind.

## Beschreibung

Ausführungsbeispiele betreffen eine Verbindungsanordnung für eine medienführende Leitung sowie Verfahren zum Verbinden einer medienführenden Leitung.

Bei einer Vielzahl von Anwendungen sollen medienführende Leitungen miteinander oder einem Gehäuse verbunden werden. Bei dem Gehäuse kann es sich zum Beispiel um ein Gehäuse einer Pumpe, eines Ventils, eines Verteilers oder dgl. handeln. Diese Gehäuse aber auch andere Bauteile, mit denen eine Leitung verbunden werden kann, sind oft aus einem Kunststoff hergestellt. Gewindeverbindungen in Kunststoff sind aufgrund der geringen mechanischen Werkstoffkennwerte unter ungünstigen Umständen auf Überlastung gefährdet.

Konventionell werden derartige Verbindungen deshalb meist mit mindestens zwei Bauteilen, welche ein anderes Material als Kunststoff aufweisen, ausgeführt, nämlich einem Einsatz und einem Steckverbinder. Der Einsatz kann beispielsweise in ein Gehäuse eingepresst sein, oft thermisch unterstützt. Der Steckverbinder kann mit einer medienführenden Leitung verbunden sein. Einsatz und Steckverbinder können dann über ein Gewinde schraubend miteinander verbunden werden. Durch die schraubbare Verbindung kann unter ungünstigen Umständen die Gefahr auftreten, dass bei Überschreiten eines definierten Grenzdrehmomentes der Einsatz aus dem Gehäuse herausgebrochen oder herausgedreht wird. Dies kann unter ungünstigen Umständen zu Zerstörung des Gehäuses führen.

Das konventionelle Einbringen oder Einspritzen von Einsätzen oder Gewindebuchsen, beispielsweise aus Metall verbessert die Situation also meist nur unzureichend, da die Schnittstelle der Verbindung Kunststoff/ Buchse einen ähnlichen Belastungsfall darstellen kann, wie bei einem Gewinde in dem Kunststoff. Die mögliche Versagensstelle wird also oft nur verlagert. Ein Überdrehen und damit Beschädigen des gesamten Aufbaus ist weiterhin möglich. Gewindeverbindungen, wie beispielsweise Einsätze (von engl. Inserts), die eingespritzt oder nachträglich eingebracht werden, können ebenfalls die bereits beschriebenen Risiken bezüglich Überlastung und Ausfall aufweisen. Zudem können solche Bauteile unter Umständen schlecht demontiert oder ausgetauscht werden.

Es besteht daher ein Bedarf daran, ein Konzept zum Verbinden medienführender Leitungen bereitzustellen, bei dem die Gefahr einer Beschädigung bei einer Montag zumindest reduziert ist. Diesem Bedarf tragen eine Verbindungsanordnung für medienführende Leitungen sowie ein Verfahren zum Verbinden einer medienführenden Leitung nach den unabhängigen Ansprüchen Rechnung.

Ausführungsbeispiele betreffen eine Verbindungsanordnung für medienführende Leitungen mit einem Gehäuse mit wenigstens einer Bohrung. Die Verbindung umfasst auch ein Anschlussteil, welches zumindest abschnittsweise hülsenförmig ausgebildet ist. Das Anschlussteil ist drehbar in die Bohrung des Gehäuses eingesetzt, sodass das Gehäuse und das Anschlussteil bezüglich des Mediums dicht verbunden sind. Das Gehäuse und das Anschlussteil sind aus unterschiedlichen Materialien hergestellt.

Ausführungsbeispiele betreffen auch ein Verfahren zum Verbinden einer medienführenden Leitung. Dazu wird das Anschlussteil drehbar und dicht bezüglich des Mediums in einer Bohrung eines Gehäuses angeordnet. Das Anschlussteil ist aus einem anderen Material hergestellt als das Gehäuse.

Dadurch, dass das Anschlussteil drehbar in der Bohrung angeordnet ist, kann bei manchen Ausführungsbeispielen vermieden oder zumindest die Gefahr reduziert werden, dass ein Drehmoment, das auf das Anschlussteil wirkt oder ausgeübt wird, auf das Gehäuse übertragen wird.

Ergänzend kann das Verfahren auch ein Verbinden eines Verbindungsstücks, das beispielsweise mit einer Zufluss- und/oder Abflussleitung verbunden sein kann, in das bereits drehbar in das Gehäuse eingesetzte Anschlussteil umfassen.

Bei manchen Ausführungsbeispielen ist das Material des Gehäuses ein Kunststoff bzw. das Gehäuse ist aus einem Kunststoff hergestellt. Bauteile aus Kunststoff können unter Umständen bei einem Herstellen von Verbindungen besonders leicht beschädigt werden, weil diese geringere Drehmomente oder Kräfte aushalten können. Durch die beschriebene Verbindungsanordnung kann bei manchen Ausführungsbeispielen auch eine dichte, stabile und möglichst beschädigungsfrei montierbare Verbindungsanordnung einer Leitung mit einem Kunststoffgehäuse ermöglicht werden.

Ergänzend oder alternativ weist das Anschlussteil bei manchen Ausführungsbeispielen eine Befestigungsstruktur auf, welche ein Gewinde, eine Klemmverbindung und/oder eine Steckverbindung ist. Bei manchen Ausführungsbeispielen kann so eine dichte Verbindung zwischen dem Anschlussteil und einer Leitung, die mit dem Gehäuse verbunden werden soll, ermöglicht werden.

Das Anschlussteil kann eine Haltefläche aufweisen. Bei manchen Ausführungsbeispielen kann so verhindert werden, dass sich das Anschlussteil, beispielsweise wenn eine Leitung an dem Anschlussteil befestigt werden soll, in der Bohrung des Gehäuses weiter dreht.

Ergänzend oder alternativ weist das Gehäuse und/oder das Anschlussteil bei manchen Ausführungsbeispielen wenigstens einen Axialanschlag auf, um das Anschlussteil in axialer Richtung an dem Gehäuse zu fixieren. Bei manchen Ausführungsbeispielen kann so ein Herausrutschen des Anschlussteils und der damit befestigten Leitung oder auch ein Versinken oder ein Hineinrutschen des Anschlussteils in das Gehäuse vermieden werden.

Die Verbindungsanordnung kann wenigstens ein Dichtelement umfassen, das in radialer Richtung zwischen dem Anschlussteil und dem Gehäuse angeordnet ist. Bei manchen Ausführungsbeispielen kann so ermöglicht werden, dass das Anschlussteil dicht bezüglich des Mediums, das durch das Anschlussteil in das Gehäuse eingebracht wird, gegenüber dem Gehäuse abgedichtet ist.

Ergänzend oder alternativ weist das Gehäuse bei manchen Ausführungsbeispielen eine Tasche auf, welche ausgebildet ist, um das Anschlussteil zumindest teilweise in axialer Richtung zu überlappen. Unter Umständen kann so ermöglicht werden, dass ein Kippen des Anschlussteils gegenüber dem Gehäuse verhindert wird.

Bei manchen Ausführungsbeispielen schließt an die Bohrung des Gehäuses eine zweite Leitung an, welche einstückig mit dem Gehäuse hergestellt ist. Unter Umständen kann so bei manchen Ausführungsbeispielen auf einfache Art und Weise ermöglicht werden, dass zwischen dem Gehäuse und der Leitung eine bezüglich des Mediums dichte Verbindung besteht.

Ergänzend oder alternativ ist das Gehäuse bei manchen Ausführungsbeispielen für eine Vorrichtung zum dosierten Verteilen eines Schmiermediums ausgebildet. Unter Umständen kann bei manchen Ausführungsbeispielen das Anschließen von Leitungen bei solchen Vorrichtungen erleichtert werden und eine Gefahr, dass das Gehäuse bei einem Anschließen der Leitung beschädigt wird, zumindest reduziert werden.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben.

So zeigen die Figuren schematisch die nachfolgenden Ansichten.
- Fig. 1: zeigt eine schematische Darstellung einer Längsschnittansicht einer Verbindungsanordnung gemäß einem Ausführungsbeispiel;
- Fig. 2: zeigt eine schematische Darstellung einer Seitenansicht der Verbindungsanordnung der Fig. 1;
- Fig. 3: zeigt eine schematische Darstellung einer Querschnittansicht der Verbindungsanordnung der Fig. 1;
- Fig. 4: zeigt eine schematische Darstellung einer Vorderansicht der Verbindungsanordnung der Fig. 1;
- Fig. 5: zeigt eine schematische Darstellung einer Längsschnittansicht einer Verbindungsanordnung gemäß einem weiteren Ausführungsbeispiel;
- Fig. 6: zeigt eine schematische Darstellung einer Seitenansicht der Verbindungsanordnung der Fig. 5;
- Fig. 7: zeigt eine schematische Darstellung einer Querschnittansicht der Verbindungsanordnung der Fig. 5;
- Fig. 8: zeigt eine schematische Darstellung einer Vorderansicht der Verbindungsanordnung der Fig. 5;
- Fig. 9: zeigt eine schematische Darstellung eines Verfahrens zum Verbinden einer medienführenden Leitung;
- Fig. 10: zeigt eine schematische Darstellung einer perspektivischen Ansicht eines Gehäuses in einem teilmontierten Zustand für eine Verbindungsanordnung gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

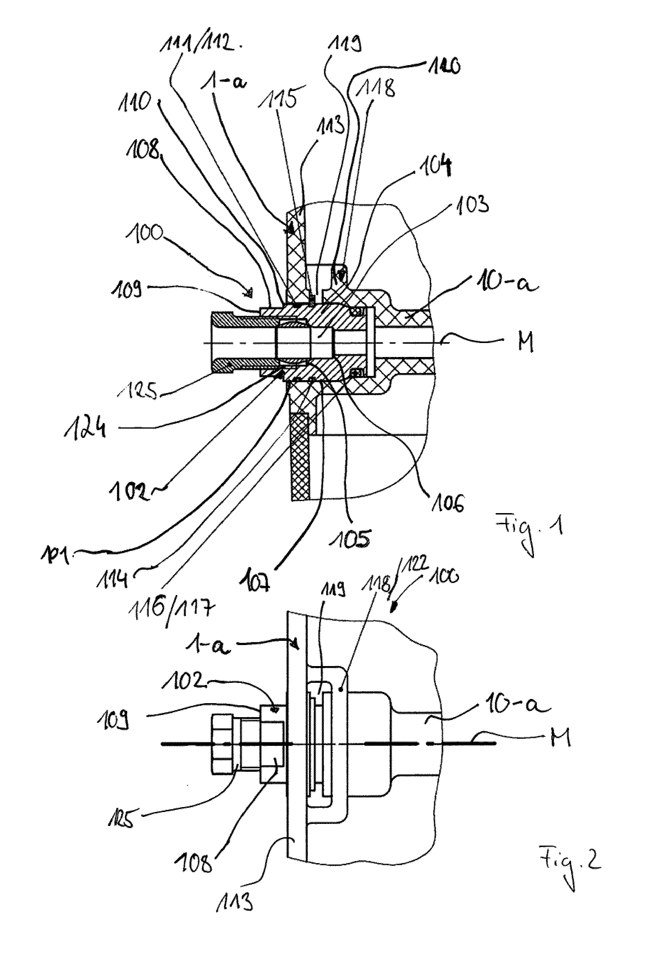

Die Fig. 1 bis 4 zeigen schematische Darstellungen unterschiedlicher Ansichten einer Verbindungsanordnung 100 gemäß einem Ausführungsbeispiel. Die Verbindungsanordnung 100 für eine medienführende Leitung umfasst ein Gehäuse 1-a mit wenigstens einer Bohrung 101. In der Bohrung 101 ist ein Anschlussteil 102 um eine Mittelachse M drehbar und bezüglich eines Mediums, das in der Leitung geführt ist, dicht angeordnet. Das Anschlussteil 102, welches auch als Einsatz bezeichnet werden kann, ist aus einem anderen Material hergestellt als das Gehäuse 1-a. Das Anschlussteil 102 weist zumindest einen hülsenförmigen Abschnitt auf.

Ein drehbares Anordnen des Anschlussteils 102 in der Bohrung 101 kann dabei beispielsweise so erfolgen, dass das Anschlussteil 102 in der Bohrung 101 um die Mittelachse M zumindest um eine Viertel, eine Halbe oder eine ganze oder eine Mehrzahl von Umdrehungen gedreht werden kann, ohne dass dies zu einer Beschädigung des Gehäuse 1-a oder des Anschlussteils 102 führt. Ein Drehmoment, das dazu auf das Anschlussteil 102 aufgebracht wird, wird nicht auf das Gehäuse 1-a übertragen. Unter Umständen kann ein Grenzdrehmoment eingestellt werden, bis zu dessen Überschreitung das Anschlussteil 102 in der Bohrung 101 reibschlüssig gehalten wird. Erst ab der Überschreitung dieses Grenzdrehmoments wird das Anschlussteil 102 in der Bohrung 101 gedreht. Ferner soll die Verbindung zwischen dem Gehäuse 1-a und einer Leitung, die über das Anschlussteil 102 an dem Gehäuse 1-a angeschlossen ist, auch wenn das Anschlussteil 102 in der Bohrung 101 gedreht wird, dicht sein. Damit werden bei manchen Ausführungsbeispielen auch Torsionsmomente, ausgehend von der Leitung, einem Rohr oder einer Rohrverschraubung, welche über das Anschlussteil 102 mit dem Gehäuse 1-a verbunden wird, nicht auf das Gehäuse 1-a übertragen.

Eine nicht dargestellte medienführende Leitung die mit der Verbindungsanordnung 100 an eine andere Leitung, an das Gehäuse 1-a oder ein anderes Gehäuse angeschlossen wird, kann zum Beispiel ein rohrartiges Bauteil sein, das ausgebildet ist, um ein Medium zu führen, beispielsweise ein Schlauch oder ein Rohr. Die Leitung kann zur Montage, oder wenn eine Vorrichtung mit der Verbindungsanordnung nicht in Betrieb ist auch frei von dem Medium sein. Die Leitung kann alle möglichen Materialien umfassen, wie Metall, Kunststoff oder dgl. Unter Umständen kann die Leitung starr oder flexibel sein.

Das Medium kann unter Umständen eine Flüssigkeit oder ein Gas, beispielsweise Druckluft, ein Reinigungsmittel, eine Farbe, ein Hydraulikmedium, ein Schmiermedium und/oder dgl. sein. Das Schmiermedium kann gegebenenfalls unterschiedliche Viskositäten aufweisen, beispielsweise eine Schmierflüssigkeit, ein Schmieröl und/oder ein Schmierfett sein.

Das Anschlussteil 102 umfasst eine Durchgangsbohrung 103 durch die das Medium durch das Anschlussteil 102 hindurch treten kann. Die Durchgangsbohrung 103 ist von einem hülsenförmigen Abschnitt 104 umgeben und ist konzentrisch zu dem hülsenförmigen Abschnitt 104 angeordnet. Die Durchgangsbohrung 103 ist als Stufenbohrung mit drei unterschiedlichen Durchmessern ausgebildet. Ein Bereich mit einem mittleren Durchmesser ist in axialer Richtung zwischen dem Bereich mit dem größten Durchmesser und dem Bereich mit dem kleinsten Durchmesser angeordnet. Dadurch ergeben sich radial innen an dem Anschlussteil 102 ein erster Absatz 105 und ein zweiter Absatz 106. Das Anschlussteil 102 ist so an dem Gehäuse 1-a angeordnet, dass der Bereich mit dem größten Durchmesser aus dem Gehäuse 1-a heraus ragt.

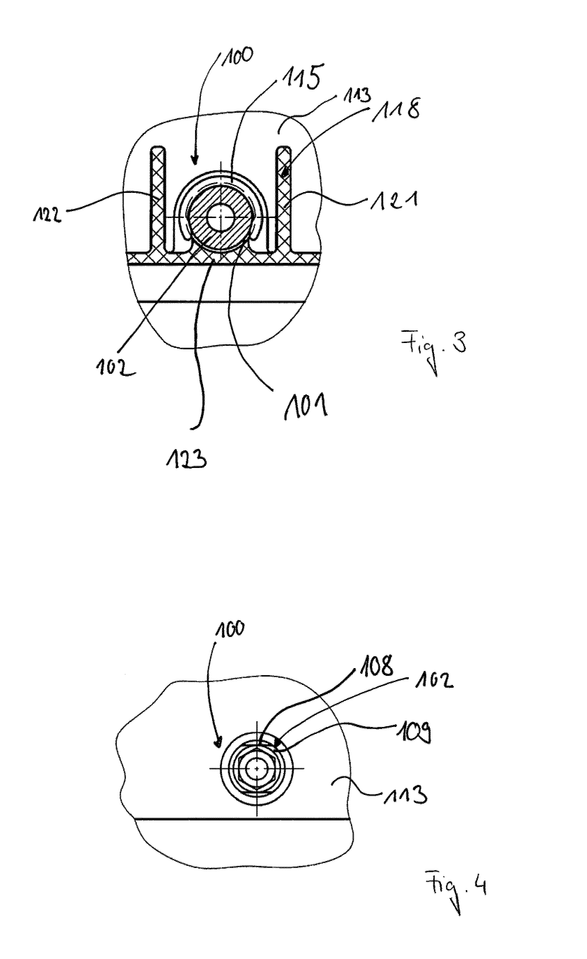

An einer nach radial außen gerichteten Mantelfläche 107 weist das Anschlussteil 102 zumindest abschnittsweise einen Durchmesser auf, der mit einem Innendurchmesser der Bohrung 101 eine Spielpassung ergibt, sodass sich das Anschlussteil 102 in der Bohrung 101 drehen lässt. Ferner weist das Anschlussteil 102 an seiner nach radial außen gerichteten Mantelfläche 107 eine Haltefläche 108 auf. An der Haltefläche 108 kann das Anschlussteil 102 gegebenenfalls mit einem Werkzeug gehalten werden. Wie in den Fig. 2 und 4 erkennbar, umfasst die Haltefläche 108 zwei ebene Abschnitte. Dazu wurde von der gedachten zylindrischen Mantelfläche 107 jeweils ein Kreissegment entfernt. Die Haltefläche 108 ist an einem axialen Ende des Anschlussteils 102 angeordnet, das in einem montierten Zustand aus dem Gehäuse 1-a herausragt. Die Haltefläche 108 endet an einer vorderen Kante des Anschlussteils, an das eine Stirnfläche 109 des Anschlussteils 102 anschließt.

Bei einigen weiteren, nicht dargestellten Ausführungsbeispielen kann die Haltefläche auch entfallen oder eine andere Form aufweisen. Unter Umständen kann die Haltefläche ausgebildet sein, um das Anschlussteil mit einem Werkzeug zu greifen. Bei dem Werkzeug kann es beispielsweise um einen Schraubenschlüssel handeln. Entsprechend kann die Haltefläche einen Mehrkant, beispielsweise einen Sechskant aufweisen. Ergänzend oder alternativ kann die Haltefläche eine Vertiefung, beispielsweise eine Bohrung sein, in die mit einem Werkzeug eingegriffen werden kann. Ebenso kann die Haltefläche eine Oberfläche aufweisen, die ausgebildet ist, um mit einer Zange gegriffen zu werden. Unter Umständen kann die Oberfläche eine Struktur mir Erhöhungen und/oder Vertiefungen aufweisen. Die Haltefläche kann ausgebildet sein, um ein Gegenmoment auf das Anschlussteil aufzubringen. Dabei kann das Gegenmoment einem Drehmoment, das zum Verbinden des Anschlussteils mit der Leitung oder einem Verbindungsstück für die Leitung ausgeübt wird, entgegengerichtet sein.

In axialer Richtung benachbart zu der Haltefläche 108 ist ein Absatz 110 angeordnet. An den Absatz 110 schließt ein Abschnitt mit einem größeren Durchmesser als im Bereich der Haltefläche 108 an. Bei einigen weiteren, nicht dargestellten Ausführungsbeispielen können der Absatz und die daraus resultierende Außendurchmesseränderung auch entfallen. Auf einer Seite des Absatzes 110, die der Haltefläche 108 abgewandt ist, umfasst das Anschlussteil 102 an seiner nach radial außen gerichteten Mantelfläche 107 eine Nut 111. Die Nut 111 ist in Umfangsrichtung umlaufend angeordnet und dient zur Aufnahme einer Abdichtung 112. Die Abdichtung 112 befindet sich in einem monierten Zustand in einer axialen Überlappung mit einer Wand 113 des Gehäuses 1-a. Die Wand 113 des Gehäuses 1-a ist dabei ein Bereich, in dem das Gehäuse 1-a eine durchschnittliche Wandstärke aufweist. Die Wand 113 kann beispielsweise eine Schutzhülle sein, die einen Innenraum des Gehäuses 1-a gegenüber einer Umgebung abschirmt. Die Abdichtung 112 kann zum Beispiel ein elastisches Material umfassen oder aus diesem hergestellt sein. Beispielsweise kann es sich bei der Abdichtung 112 um einen Ring oder um einen Streifen handeln, der in die Nut 111 eingelegt wurde. Die Abdichtung 112 weist in die radiale Richtung eine größere Ausdehnung auf als die Nut 111, sodass sie aus der Nut 111 heraussteht, um eine Abdichtung, gegen von außen in das Gehäuse 1-a eindringen Schmutz und Feuchtigkeit, zu bewirken. In dem Gehäuse 1-a können sich bei vielen Anwendungsfällen zu schützende elektrische und/oder mechanische Komponenten befinden.

Des Weiteren umfasst das Anschlussteil 102 auch eine Dichtungsaufnahmenut 116, welche ebenfalls in Umfangsrichtung umlaufend an der Mantelfläche 107 angeordnet ist. Die Dichtungsaufnahmenut 116 befindet sich nahe eines axialen Endes des Anschlussteils 102, das der Haltefläche 108 abgewandt ist. Die Dichtungsaufnahmenut 116 ist axial innerhalb eines Abschnitts angeordnet, in dem sich das Anschlussteil 102 verjüngt und einen geringeren Außendurchmesser aufweist. Dadurch, dass sich das Anschlussteil 102 verjüngt, kann unter Umständen ein Einführen in das Gehäuse 1-a erleichtert werden. In der Dichtungsaufnahmenut 116 ist eine Dichtung 117 angeordnet. Die Dichtung 117 ist als O-Ring ausgebildet. Dadurch übernimmt das Anschlussteil 102 auch eine Dichtfunktion gegen das zu transportierende und in der Regel unter Druck stehende Medium gegenüber dem Gehäuse 1-a.

Bei einigen weiteren, nicht dargestellten Ausführungsbeispielen kann das Anschlussteil eine andere Form aufweisen. Ein hülsenfömiger Abschnitt kann beispielsweise jedwedes Bauteil sein, das ausgebildet ist, um ein Medium, geführt durch eine Außenwand hindurchtreten zu lassen. Beispielsweise kann das Bauteil dazu eine Bohrung aufweisen. Die Bohrung und/oder eine Mantelfläche des hülsenförmigen Abschnitts kann alle möglichen Formen, beispielsweise Kreis, Rechteck, Vieleck oder dgl. aufweisen. Die Bohrung kann konzentrisch zu der Mantelfläche angeordnet sein. Der hülsenförmige Abschnitt kann zylindrisch ausgebildet sein oder aber auch seine Form und/oder seine Größe in axialer Richtung verändern.

Bei dem Ausführungsbeispiel der Figuren schließt an die Wand 113 des Gehäuses 1-a über eine Tasche 118 eine Leitung 10-a an, in die das Medium eingebracht wird. Die Wand 113 des Gehäuses 1-a, die Tasche 118 und die Leitung 10-a sind einstückig hergestellt. Das Anschlussteil 102 ist damit teilweise in axialer Richtung überlappend radial innerhalb der Leitung 10-a angeordnet. Die Dichtung 117 ist also radial zwischen dem Anschlussteil 102 und der Leitung 10-a angeordnet, axial überlappend mit der Tasche 118. Die Leitung 10-a weist dabei im Bereich der Tasche 118 einen größeren Durchmesser als ihren durchschnittlichen Leitungsöffnungsquerschnitt auf. Bei der Tasche 118 handelt es sich im Wesentlichen um eine Verstärkung und Materialanhäufung. Das Gehäuse 1-a kann so für die Aufnahme der entsprechenden Kräfte gestaltet und dimensioniert sein.

Die Tasche 118 weist ferner einen axialen Spalt 119 auf. Dieser ergibt sich zwischen einer Innenseite der Wand 113 und einer Schulter 120 der Tasche 118. Ferner weist das Anschlussteil 102 an seiner Mantelfläche 107 eine in Umfangsrichtung umlaufende Sicherungsringnut 114 auf. Diese dient zur Aufnahme eines Sicherungsrings 115. Über den Sicherungsring 115 kann das Anschlussteil 102 in axialer Richtung M an dem Gehäuse 1-a gesichert werden. Dazu legt sich der Sicherungsring 115 an einer Innenseite der Wand 113 des Gehäuse 1-a an. Der Sicherungsring 115 dient zur die Aufnahme bzw. zur Übertragung der axial wirkenden Kräfte auf das Gehäuse 1-a, deren Hauptteil in der Regel durch das unter Druck stehende Medium erzeugt wird. Der Sicherungsring 115 weist die Form eines Halbmondrings auf und sichert das Anschlussteil 102 gegen herausziehen aus der Bohrung. Entlang einer axialen Ausdehnung des Spalts 119 kann sich der Sicherungsring 115 und damit auch das Anschlussteil 102 in axialer Richtung bewegen. Die Schulter 120 ragt dabei nach radial außen, weg von der Leitung 10-a und stellt einen weiteren Anschlag für den Sicherungsring 115 in die axiale Richtung dar. Die Innenseite der Wand 113 stellte den axialen Anschlag für den Sicherungsring 115 in die entgegengesetzte axiale Richtung dar. Die Innenseite der Wand 113 kann dabei beispielsweise einen Innenraum des Gehäuses begrenzen. Beispielsweise kann sich die Innenseite der Wand 113, wie in der Fig. 1 erkennbar, die einen axialen Anschlag für den Sicherungsring 115 darstellt, radial außerhalb der Bohrung befinden. Beispielsweise kann der Sicherungsring 115 bei einem geschlossenen Zustand des Gehäuses, also beispielsweise in einem Betriebszustand des Gehäuses und/oder von außen nicht zugänglich sein. Ein Kraftfluss von der Schulter 120 und eine Abdichtung gegenüber dem Medium kann also über die Tasche 118 erfolgen. Bei einigen weiteren, nicht dargestellten Ausführungsbeispielen kann der Sicherungsring eine andere Form aufweisen, in eine Nut in dem Gehäuse eingesetzt sein und/oder sich nur gegen einen Absatz abstützen.

Wie in der Fig. 3 erkennbar, erstreckt sich die Tasche 118 nicht umlaufend, sondern nur abschnittsweise um die Bohrung 101 oder das Anschlussteil 102. Dazu umfasst die Tasche 118 zwei im Wesentlichen parallel zueinander angeordnete Schenkel 121 und 122, die die Bohrung 101 zwischen sich aufnehmen. Die beiden Schenkel 121 und 122 sind über eine Verstärkungsstruktur 123 der Tasche 118 miteinander verbunden. Wie in Fig. 2 erkennbar, weist die Tasche 118 bzw. einer ihrer Schenkel, von denen in Fig. 2 der Schenkel 122 erkennbar ist, in der Seitenansicht eine C-Form auf. Die Enden des Schenkels 122 sind dabei an der Wand 113 befestigt bzw. angespritzt. Zwischen den Enden wölbt sich der Schenkel 122 bzw. die Tasche 118 weg von der Wand 113, sodass sich zumindest abschnittsweise der Spalt 119 ergibt. Der Spalt 119 ist zumindest abschnittsweise nach radial außen geöffnet, sodass der Sicherungsring 115 eingesetzt werden kann. Die Tasche 118 weist in radialer Richtung zumindest abschnittsweise eine größere Ausdehnung auf als die Bohrung 103 in dem Gehäuse 1-a. Zudem weist die Tasche 118 in axialer Richtung in einen Innenraum hinein, der von dem Gehäuse 1-a zumindest teilweise umschlossen ist. Eine axiale Ausdehnung der Tasche 118 ist größer als eine durchschnittliche Wandstärke 113 des Gehäuses 1-a. Die Tasche 118 ist also in dem Gehäuse 1-a angeordnet und auf der Innenseite platziert, sodass sie nicht von außen sichtbar ist. Somit kann die Außenkontur des Gehäuses 1-a glatt, ohne Vorsprünge und Nischen ausgeführt werden.

Bei einigen weiteren, nicht dargestellten Ausführungsbeispielen kann die Tasche auch eine andere Form aufweisen, entfallen oder auf einer Außenseite des Gehäuses angeordnet sein. Eventuell kann die Tasche auch beidseitig der Gehäusewand angeordnet sein. Unter Umständen können auch die Nuten zur Aufnahme der Dichtungen in der Tasche angeordnet sein. Unter Umständen können auch alle Bauteile, wie Sicherungsringe und Dichtungen an dem Gehäuse angeordnet sein. Bei manchen Ausführungsbeispielen kann so möglicherweise eine Montage vereinfacht werden, wenn das Anschlussteil nur noch in die Bohrung in dem Gehäuse eingeführt werden muss.

Als Material weist das Anschlussteil 102 ein Metall oder ein anderes, von Kunststoff verschiedenes Material auf. Das Gehäuse 1-a ist aus einem Kunststoff hergestellt. Bei einigen weiteren, nicht dargestellten Ausführungsbeispielen kann das Gehäuse ein weicheres Material als das Anschlussteil aufweisen, beispielsweise Holz, eine Holzwerkstoff oder einen Kunststoff. Der Kunststoff kann zum Beispiel ein Thermoplast, wie Polyethylen, Polypropylen, Polyoxymethylen, Polyethylen, Polypropylen, Polyamid, Polyethylenterephthalat, Polybutylenterephtalat und/oder dgl. sein oder ein Duroplast, Polyesterharze, Polyurethanharze und/dgl. Das Gehäuse und/oder einzelne Komponenten des Gehäuses können beispielsweise als Kunststoffspritzgussteil hergestellte sein. Als weitere mögliche Herstellungsverfahren kommen auch Extrudieren, Blasformen, Thermoformen und/oder Schäumen in Frage. Bei manchen Ausführungsbeispielen kann das Gehäuse Kunststoff als einziges Material umfassen. Das Gehäuse kann zum Beispiel metallfrei hergestellt sein. Bei anderen Ausführungsbeispielen kann das Gehäuse, beispielsweise zu Stabilisierungszwecken weitere Materialien umfassen. Unter Umständen kann das Gehäuse als einstückiges Kunststoffspritzgussteil hergestellt sein. Bei anderen Ausführungsbeispielen können auch Einzelteile, beispielsweise Kunststoffspritzgussteile wie die Leitung an dem Gehäuse montiert werden.

Radial innen ist das Anschlussteil 102, welches auch als Steckeinsatz bezeichnet werden kann, ausgebildet um mit einer nicht dargestellten Leitung, in der ein Medium geführt wird, verbunden zu werden. Die Fixierung und Dichtung der Leitung, welche auch als Rohrleitung bezeichnet werden kann, kann als Rohrverschraubung, ausgebildet sein. Dabei kann es sich um eine allgemeine Rohrverschraubung oder um eine Rohverschraubung nach einer DIN-Norm, beispielsweise DIN3862, DIN 3852, DIN EN ISO 8434 oder dgl. handeln.

Der Anschluss für die Rohrleitung umfasst mehr als ein zu montierendes Teil, nämlich ein Verbindungsstück 125, das mit dem Anschlussteil 102 verbunden werden kann. Das Verbindungsstück 125 kann direkt oder über weitere Komponenten mit einer Leitung oder einer Zuflussleitung verbunden werden. Das Verbindungsstück 125 wird zumindest abschnittsweise axial überlappend radial in das Anschlussteil 102 eingesetzt. Das Anschlussteil 102 umhaust also das Verbindungsstück 125, welches auch als Element für eine Fixierung, Kräfteaufnahme und Abdichtung gegenüber der Rohrleitung dient, welche mit dem Gehäuse 1-a verbunden werden soll. Das Anschlussteil 102 weist dazu an seiner nach radial innen gerichteten Fläche in dem Bereich mit dem größten Innendurchmesser ein Gewinde 124 auf. Bei einigen weiteren, nicht dargestellten Ausführungsbeispielen kann das Gewinde auch an einem anderen Abschnitt vorgesehen sein. Das Verbindungsstück 125 weist an seiner radial nach außen gerichteten Fläche ein Außengenwinde auf, das ausgebildet ist, um mit dem Gewinde 124 verbunden zu werden. Das Verbindungsstück 125, welches auch als aufgeschraubter Steckverbinder bezeichnet werden kann, ist im Wesentlichen hülsenförmig ausgebildet. Besonders bei den Ausführungsbeispielen, bei denen das Verbindungsstück 125 über ein Gewinde, also durch drehen mit des Anschlussteil 102 verbunden wird, kann das Vorsehen der Haltefläche 108 an dem Anschlussteil 102 relevant sein. Die Haltefläche 108 kann beispielsweise als eine von außen zugängliche Schlüsselfläche ausgebildet sein, um ein Kontern oder ein Festlegen mittels einer Überwurfmutter zu ermöglichen. Das Verbindungsstück 125 kann beispielsweise aus dem gleichen Material wie das Anschlussteil 102, beispielsweise einem Metall, hergestellt sein oder dieses umfassen.

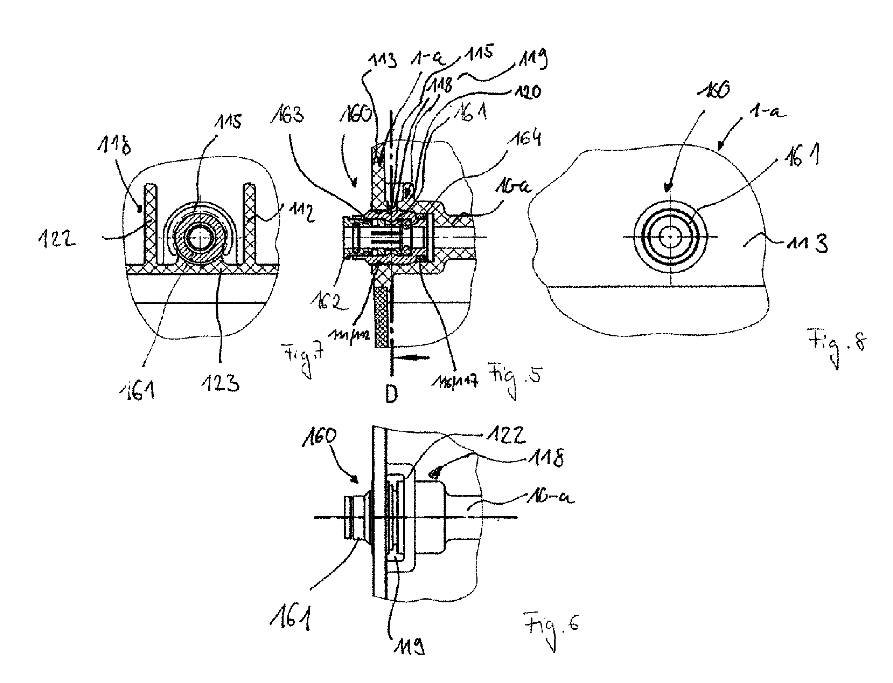

Die Fig. 5 bis 8 zeigen schematische Darstellung unterschiedlicher Ansichten einer Verbindungsanordnung 160 gemäß einem weiteren Ausführungsbeispiel. Die Verbindungsanordnung 160 ist im Wesentlichen ähnlich zu der Verbindungsanordnung 100 aufgebaut. Ein Unterscheidungsmerkmal ist, dass das Anschlussteil 161 ausgebildet ist, um eine Steckverbindung aufzunehmen. Das Anschlussteil 161 umfasst also einen integrierten Steckverbinder. Eine Fixierung und Dichtung der Rohrleitung kann über einen sog. Schnellverbinder oder Steckverbinder erfolgen. Die Anordnung des Anschlussteils 161 in dem Gehäuse 1-a erfolgt analog wie für die Fig. 1 bis 4 beschrieben. Als Schnellverbinder wird eine Verbindungsstück 162 eingesetzt, welches ausgebildet ist, um an einer Innenfläche des Anschlussteils 161 zu klemmen. Um das Verbindungsstück 162 bezüglich des Mediums gegenüber dem Anschlussteil 161 abzudichten, ist ein erster Dichtring 163 in radialer Richtung zwischen dem Verbindungsstück 162 und dem Anschlussteil 161 angeordnet. Ein zweiter Dichtring 164 ist zwischen einem axialen Ende des Verbindungsstücks 162 und einem Axialanschlag des Anschlussteils 161 angeordnet. Da zum Verbinden des Verbindungsstücks 162 mit dem Anschlussteil 161 kein Drehmoment aufgebracht werden muss, kann die Haltefläche, wie in Fig. 8 erkennbar, entfallen.

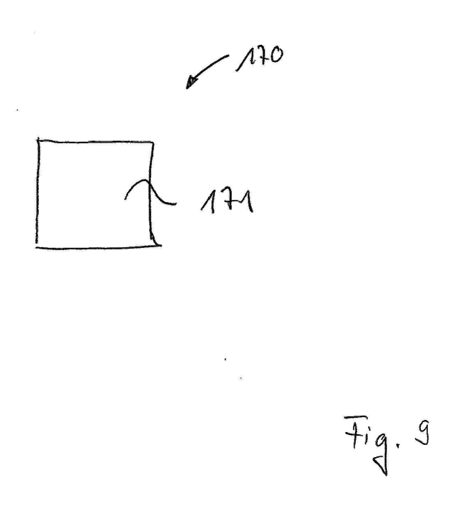

Die Fig. 9 zeigt eine schematische Darstellung eines Verfahrens 170 zum Verbinden medienführender Leitungen. Dabei erfolgt in einem Vorgang 171 ein drehbares, jedoch dichtes Anordnen eines Anschlussteils in einer Bohrung eines Gehäuses aus einem anderen Werkstoff als das Anschlussteil.

Mit dem Verfahren 170 kann eine Sicherheit bei einer Montage erhöht werden. Das Anschlussteil 102 oder 161 ist als demontierbares Montageteil ausgeführt, wird in das Gehäuse 1-a eingesetzt und mit einem Sicherungsring 115 axial fixiert. Eine Beschädigung des Gehäuse 1-a, welches als Kunststoffgehäuses ausgebildet sein kann, kann durch das Einbringen des Anschlussteils 102 oder 161 bei manchen Ausführungsbeispielen nahezu - insbesondere im Vergleich zu konventionellen Verbindungsanordnungen, ausgeschlossen werden. Eine Remontage, beispielsweise bei einem beschädigten Anschlussteil 102 oder 161 ist möglich.

Ferner kann sich bei manchen Ausführungsbeispielen eine Erhöhung der Sicherheit bei der Installation des kompletten Gerätes, das die Verbindungsanordnung 100, 160 umfasst, beispielsweise durch den Kunden erreicht werden. Eine Schnittstelle bei der Installation des Gerätes in ein System kann unter anderem der Anschluss der Rohrleitungen sein. Über die Rohrleitung eingebrachte Momente, zum Beispiel ein Drehmoment bei der Installation, beispielsweise durch Verdrehen der Rohrleitung oder Festziehen der Armaturen, können bei der Verbindungsanordnung 100, 160 unter Umständen keinen Kraft- und/oder Momentenfluss auf das Gehäuse bewirken. Dadurch kann gegebenenfalls auch eine Sicherheit während des Betriebes erhöht werden. Auch Momente, die sich beispielsweise durch Bewegung der angeschlossenen Maschinenteile ergeben können, erzeugen bei manchen Ausführungsbeispielen keinen Kraft-/Momentenfluss, insbesondere Drehmomentfluss auf das Gehäuse 1-a. Mit den Verbindungsanordnungen 100 und 160 kann gegebenenfalls eine robuste und hydraulisch dichte Verbindung bereitgestellt werden.

Bei Schraubverbindungen ist die Einhaltung des Anzugmomentes wichtig. Ist das Anzugmoment zu niedrig ist die Verbindung zwischen einer Armatur und einem Gehäuse undicht oder die Armatur kann verloren gehen (Selbsthemmung Gewinde/ Vorspannung). Ist das Anzugsmoment zu hoch, kann die Verbindung zerstört werden. Bei der Verwendung von Kunststoff (Armatur oder Gehäuse) sind die zulässigen Toleranzen für das Anzugsmoment und das zulässige Niveau relativ gering. Durch die Verbindungsanordnungen 100 und 160 kann trotzdem ein ausreichendes Anzugsmoment aufgebracht werden, ohne die Bauteile der Verbindungsanordnung 100, 160 zu beschädigen. Die Montage kann einfach, schnell und sicher erfolgen. Dazu wird das Anschlussteil 102, 161 mit den Dichtungen 112 und 117 in die in das Gehäuse 1-a modellierte Tasche 118, welche auch als Senkung bezeichnet werden kann, axial eingeschoben und mit dem Sicherungsring 115 radial fixiert.

Bei konventionellen Verbindungsanordnungen werden Armaturen und Rohranschlüsse bei vielen hydraulischen Anwendungsfällen mit einem Eingang und/oder einem Ausgang eines Gehäuses verbunden (siehe auch DIN EN ISO 9974, DIN 3852). Gewinde sind bewährte, einfache und zuverlässige Verbindungen. Prinzip-bedingt wird das Werkstoffpaar (Gewindezapfen / Gewindeöffnung) meist auf Scherung und Zug belastet. Über die Gewindesteigung (schräge Ebene) wird eine relativ hohe Anpresskraft mit einem relativ geringen Anzugsmoment erzeugt. Wird das maximal zulässige Anzugsmoment (Drehmoment), welches sich aus den zulässigen Werkstoffkennwerten ergibt, überschritten, so kann das zu einer dauerhaften Zerstörung der Gewindeverbindung führen, wobei oft der Verbindungspartner zerstört wird, dessen Material die geringeren Festigkeitskennwerte aufweist. In der Anwendung von hydraulischen oder pneumatischen Armaturen usw. kann dies zu Undichtigkeiten und einer Unbrauchbarkeit führen.

Eine Überbeanspruchung der Materialien durch Fehlbedienung ist bei den Verbindungsanordnungen 100, 160 nicht möglich bzw. eine Gefahr ist zumindest reduziert. Der Sicherungsring 115 kann mit handelsüblichen Greifwerkzeugen oder auch mit automatischer Zuführung montiert werden. Eine De- und Remontage sind bei manchen Ausführungsbeispielen auf einfache Art und Weise möglich. Bei den Verbindungsanordnungen 100, 160 erfolgt die Abdichtung des Anschlussteils 102 oder 161 durch eine Weichdichtung, beispielsweise O-Ring mit definierter Vorspannung zu dem Gehäuse 1-a. Die Vorspannung der Weichdichtung kann eventuell durch eine Geometrie der Bohrung, der Nut und/oder der Dichtung bestimmt werden. Beispielsweise kann als Dichtung ein radialdichtender O-Ring eingesetzt werden. Axiale Zug- und Druckkräfte, die auf das Anschlussteil 102 bzw. die Verbindung wirken, werden durch den Sicherungsring 115 (z.B. Halbmondring) aufgefangen. Der Sicherungsring 115 ist in der Nut 114 des Anschlussteils 102, welches auch als Armatur bezeichnet werden kann, eingerastet. Die Einrastung verhindert ein Herausrutschen des Anschlussteils 102 aus dem Gehäuse 1-a. In dem Gehäuse 1-a befindet sich die zugehörige Tasche 118. Axial wirkende Kräfte (Zug- und Druck) stützen sich über dem Sicherungsring 115 auf der Schulter der Nut 114 und über die Schulter 120 der Tasche 118 ab. Die Wandungen der Tasche 118 sind ausreichend dimensioniert, um die axialen Kräfte aufzunehmen. Drehmomente wirken nicht auf die Verbindung Armatur/ Gehäuse, da das Anschlussteil 102 als Steckeinsatz drehbar ist und so bei manchen Ausführungsbeispielen keine Drehomentenübertragung auf das Gehäuse 1-a erfolgt.

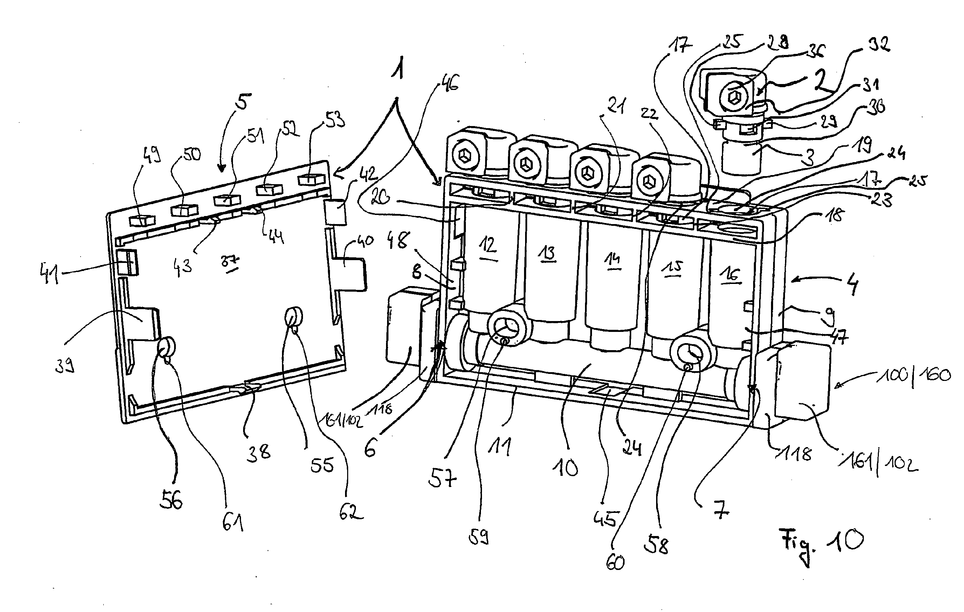

Die Fig. 10 zeigt eine schematische Darstellung einer perspektivischen Ansicht eines Gehäuses 1 in einem teilmontierten Zustand für eine Verbindungsanordnung gemäß einem Ausführungsbeispiel. Das Gehäuse 1 für eine Vorrichtung zum dosierten Verteilen eines Mediums ist aus einem Kunststoff hergestellt. Eine Vorrichtung zu einem dosierten Verteilen eines Mediums kann eventuell jedwede Vorrichtung sein, die dazu ausgebildet ist, eine erste Teilmenge des Mediums an einer ersten Stelle und eine zweite Teilmenge des Mediums an einer zweiten Stelle auszubringen.

Das Gehäuse 1 ist als einstückiges Kunststoffspritzgussteil hergestellt. Bei anderen Ausführungsbeispielen kann das Gehäuse auch aus Einzelteilen zusammengesetzt sein. Um zu ermöglichen, dass das Gehäuse aus Kunststoff herstellbar ist, kann das Gehäuse gegebenenfalls gewindefrei hergestellt sein.

Das Gehäuse 1 umfasst eine Gehäuseschale 4 und eine Frontblende 5, welche später noch genauer beschrieben wird. Die Gehäuseschale 4 ist quaderförmig und weist eine offene Seite auf, welche durch die Frontblende 5 verschlossen werden kann. Das Gehäuse 1 umfasset einen ersten Zufluss 6 und einen zweiten Zufluss 7, durch welche das zu verteilende Medium in das Gehäuse 1 eintritt. An den Zuflüssen 6 und 7 kann jeweils eine Verbindungsanordnung gemäß einem Ausführungsbeispiel, beispielsweise die Verbindungsanordnung 100 oder 160 vorgesehen sein. Dazu können beispielsweise die Anschlussteile 102 oder 161 drehbar in einer nicht dargestellten Bohrung in dem Gehäuse 1 angeordnet sein. Dies kann analog zu der Anordnung in dem Gehäuse 1-a erfolgen. Beispielsweise können dazu Taschen 118 an dem Gehäuse 1, ähnlich zu den Taschen an dem Gehäuse 1-a ausgebildet sein, auch wenn die Taschen 118, bei dem Gehäuse 1 an einer Außenseite des Gehäuses angeordnet sind. Unter Umständen können die Taschen 118 auch in dem Gehäuse 1, wie für die Fig. 1 bis 8 beschrieben, angeordnet sein.

Die Zuflüsse 6 und 7, welche auch als Hauptleitungsanschlüsse bezeichnet werden können, sind an jeweils gegenüberliegenden Seitenwänden 8 und 9 angeordnet. Über eine Hauptleitung 10 sind die Zuflüsse 6 und 7 miteinander fluidtechnisch verbunden. Die Hauptleitung 10 ist ein Rohr, welches im Wesentlichen parallel zu einem Boden 11 der Gehäuseschale 4 angeordnet ist. Von der Hauptleitung 10 zweigen fünf Verteilerleitungen 12, 13, 14, 15 und 16 ab. Diese sind ebenfalls als Rohre ausgebildet. Die Verteilerleitungen 12, 13, 14, 15 und 16 sind in der Gehäuseschale 5 und jeweils parallel zu den Seitenwänden 8 und 9 angeordnet. Jede der Verteilerleitungen 12, 13, 14, 15 und 16 endet an einem der Hauptleitung 10 gegenüberliegendem Ende in einer Aufnahme 17 für jeweils eine Dosiereinrichtung 2, über die das Medium dosiert verteilt wird. So sind die Zuflüsse 6 und 7 mit den Aufnahme 17 über ein Leitungssystem, welches die Hauptleitung 10 und die Verteilerleitung 12, 13, 14, 15 und 16 umfasst, verbunden.

In der Gehäuseschale 4 ist eine Zwischenwand 18 angeordnet, welche sich zwischen den beiden Seitenwänden 8 und 9 parallel zu einer Deckseite 19 des Gehäuses 1 erstreckt. Die Verteilerleitungen 12, 13, 14, 15 und 16 enden jeweils in der Zwischenwand 18. Mit der Deckseite 19 ist die Zwischenwand 18 über eine Mehrzahl von Stegen 20, 21, 22 und 23 verbunden, wobei jeder Steg immer zwischen zwei Verteilerleitungen angeordnet ist. Die Stege und die Zwischenwand dienen der Stabilisierung. Gegebenenfalls und können diese Bauteil bei weiteren, nicht dargestellten Ausführungsbeispielen zumindest teilweise oder auch vollständig entfallen.

Die in der Gehäuseschale 4 angeordneten Bauteile, Hauptleitung 10, Aufnahme 17, Zwischenwand 18, Verteilerleitungen 12, 13, 14, 15 und 16 und die Stege 20, 21, 22 und 23 können jeweils einteilig hergestellt sein aber auch als Einzelteil zu dem Gehäuse zusammengesetzt sein. Bei einigen weiteren, nicht dargestellten Ausführungsbeispielen kann das Gehäuse auch nur einen/eine oder eine größere Anzahl an Zuflüssen und/oder Verteilerleitungen aufweisen. Unter Umständen können diese auch anders angeordnet sein. Das Gehäuse kann bei anderen Ausführungsbeispielen auch eine andere Form aufweisen. Das Gehäuse kann ein- oder mehrteilig ausgebildet sein. Bei manchen Fällen kann das Gehäuse wenigstens eine Halbschale umfassen. Die Halbschale kann unter Umständen teilweise offen bleiben und/oder über ein weiteres Bauteil zumindest teilweise oder sogar vollständig verschlossen sein.

Die Deckseite 19 umfasst eine Mehrzahl von Öffnungen 24, von denen jeweils eine konzentrisch zu einer der Verteilerleitungen 12, 13, 14, 15 und 16 angeordnet ist. Die Öffnungen 24 und die Verteilerleitungen 12, 13, 14, 15 und 16 weisen jeweils denselben Durchmesser auf. Bei einigen weiteren, nicht dargestellten Ausführungsbeispielen können diese auch unterschiedliche Durchmesser aufweisen. An die kreisförmige Öffnungen 24 schließen jeweils zwei Ausnehmungen 25 und 26 an, welche Teil eines Bajonettverschlusses sind, mit dem die Dosiereinrichtung 2 an der Aufnahme 17 festgelegt wird. Die Ausnehmungen 25 und 26 sind gegenüberliegend angeordnet.

Auch die Dosiereinrichtung 2 oder deren Bestandteile können aus den beschriebenen Materialen und mit den beschriebenen Verfahren hergestellt sein. Die Dosiereinrichtung 2 umfasst als Bestandteil einen Dosierkörper 3. Ein Innenvolumen des Dosierkörpers 3 kann dabei unter Umständen eine Menge, die mit der Dosiereinrichtung 2 dosiert bzw. portioniert wird, bestimmen. In den Dosierkörper 3 ist ein nicht dargestellter Kolben eingesetzt. Dieser fördert das Medium in den Dosierkörper 3. Als weiteres Bestandteil kann die Dosiereinrichtung 2 auch ein nicht dargestellte Verschlusselement für den Dosierkörper 3 umfassen, welches beispielsweise als Rückschlagventil dient, um zu verhindern, dass aus der Dosiereinrichtung 2 ausgebrachtes Medium wieder zurück in die Dosiereinrichtung 2 fließt.

Eventuell können nicht dargestellte Federn oder Federelemente aus Federstahlstahl und/oder ebenfalls aus Kunststoff hergestellt sein. Bei der Dosiereinrichtung 2 handelt es sich um ein Zumessventil. Um eine Menge, die ausgebracht oder dosiert werden soll, zu verändern, kann dann gegebenenfalls die Dosiereinrichtung 2 durch eine Dosiereinrichtung mit einem anderen Innenvolumen ausgetauscht werden.

Bei einigen weiteren, nicht dargestellten Ausführungsbeispielen können auch Dosiereinrichtungen eingesetzt werden, die auf einem anderen Funktionsprinzip beruhen. Beispielsweise kann die Fördermenge oder ein Volumen einer portionierten Teilmenge über ein Schließen und/oder ein Öffnen der Dosiereinrichtung bestimmt werden.

Wie das Gehäuse 1 ist auch die Dosiereinrichtung 2 gewindefrei ausgebildet. Eine Verbindung der Dosiereinrichtung 2 mit der Aufnahme 4 an dem Gehäuse 1 erfolgt über gewindefreie Befestigungsmittel, wie später noch genauer beschrieben. Bei einigen weiteren, nicht dargestellten Ausführungsbeispielen kann die Dosiereinrichtung 2 auch ein Gewinde aufweisen, beispielsweise zur Verbindung mit einer Leitung, in die das Medium dosiert wird.

Der Dosierkörper 3 weist einen Abschnitt auf, der einen kleineren Durchmesser aufweist als eine der Verteilerleitungen 12 bis 16. Dieser Abschnitt kann zumindest abschnittweise in einer der Verteilerleitung 12 bis 16 angeordnet werden. Ferner umfasst die Dosiereinrichtung 2 Nasen 28 und 29, welche einen Teil des Bajonettverschlusses an der Dosiereinrichtung 2 bilden. Die Nasen sind ebenfalls gegenüberliegend angeordnet. An einer Außenmantelfläche weist die Dosiereinrichtung 2 eine umlaufende Nut 30 auf, an welcher ein Dichtring angeordnet werden kann, um die Dosiereinrichtung 2 gegenüber der Verteilerleitung, in die sie eingesetzt ist, abzudichten. In Flussrichtung des Mediums, in gleicher Höhe wie die Nasen 28 und 29, weist die Dosiereinrichtung 2 eine Ausnehmung 31 auf, deren Funktion später noch genauer beschrieben wird. Die Ausnehmung 31 weist eine rechteckige Form auf. Die Ausnehmung 31 durchbricht dabei eine Wand des Dosierkörpers 3 nicht vollständig.

Zur Verbindung mit einer Leitung, in die das Medium dosiert eingebracht wird, weist die Dosiereinrichtung 2 einen Leitungsanschluss 32 auf, welcher als Klemmanschluss ausgebildet ist. Der Leitungsanschluss 32 weist dazu, wie in Fig. 5 erkennbar, eine C-Form auf. Zwei Schenkel 33 und 34 sind über einen Bogen 35 verbunden. Im Wesentlichen konzentrisch zu dem Bogen kann eine Leitung, beispielweise eine Schmiermittelleitung angeordnet werden. Die beiden Schenkel 34 und 35 können über eine Schraubverbindung 36 miteinander verklemmt werden. Der Leitungsanschluss 32, welcher bei manchen Ausführungsbeispielen auch als Schmiermittelleitungsanschluss bezeichnet werden kann, ist einstückig mit dem Dosierkörper 3 hergestellt. Alternativ kann der Leitungsanschluss 32 auch mit der nicht dargestellten Leitung, in die das Medium dosiert wird, an den Dosierkörper 3, beispielweise wie eine Klemmfaust, geklemmt werden. Um den Leitungsanschluss 32 in Flussrichtung des Mediums und natürlich auch in die andere Richtung zu sicheren, können Sicherungsringe und entsprechende Nuten vorgesehen sein. Die Nuten könne dabei in dem Dosierkörper und oder in dem Leitungsanschluss 32 vorgesehen sein. Bei einigen weiteren, nicht dargestellten Ausführungsbeispielen kann auch die Dosiereinrichtung statt des Leitungsanschlusses eine Verbindungsanordnung gemäß einem Ausführungsbeispiel aufweisen.

Um die Dosiereinrichtung 2 mit der Aufnahme 17 zu verbinden, wird die Dosiereinrichtung 2 so über der Öffnung 24 positioniert, dass die Nasen 28 und 29 zu den Nuten 24 und 25 fluchten. Dann wird die Dosiereinrichtung 2 soweit in der Aufnahme 17 versenkt, bis die Nasen 24 und 25 in Flussrichtung des Mediums zwischen der Zwischenwand 18 und der Deckseite 19 liegen. Dann wird die Dosiereinrichtung 2 um eine Achse, die parallel zu der Flussrichtung des Mediums angeordnet ist, gegenüber der Aufnahme 17 verdreht. Die Nasen 28 und 29 sind nicht mehr fluchtend zu den Nuten 24 und 25 angeordnet, dadurch ist die Dosiereinrichtung 2 in Flussrichtung des Mediums fixiert. Die Nasen 28 und 29 und die Nuten 24 und 25 weisen jeweils eine rechteckige Form auf. Bei einigen weiteren Ausführungsbeispielen können die Nasen und/oder die Nuten auch eine andere Form aufweisen, die als Struktur- bzw. Gegenstruktur für einen Bajonettverschluss dienen kann. Beispielsweise können statt der Nasen eine Mehrzahl von Stiften oder der dgl. vorgesehen sein, welche durch eine entsprechende Gegenstruktur hindurch geführt werden können.

Die Frontblende 5 ist als Platte ausgebildet, die im Wesentlichen eine Größe einer Seite der Gehäuseschale 5 aufweist. Über die Frontblende 5 kann die Gehäuseschale 4 verschlossen werden. Dazu sind Rastverbindungen, welche auch als Rastung bezeichnet werden können, vorgesehen. An einer Innenseite 37, die in einem montierten Zustand den Dosiereinrichtungen 2 zugewandt ist, umfasst die Frontblende 5 eine Mehrzahl von Rastvorsprünge 38 bis 44, welche in entsprechende Rastöffnungen 45 bis 48 in der Gehäuseschale greifen. Bei einigen weiteren, nicht dargestellten Ausführungsbeispielen können die Rastvorsprünge zumindest teilweise oder vollständig an der Gehäuseschale vorgesehen sein. Eventuell können die Frontblende und die Gehäuseschale auch über ein Scharnier verbunden sein.

Das Gehäuse 1 als Kunststoffgehäuse wird konstruktionsgerecht ohne Materialanhäufungen, also mit gleichmäßigen Wandstärken ausgeführt. Unter dieser Voraussetzung kann die Geometrie der Vorrichtung unter Umständen relativ zerklüftet sein. Die Frontblende 5 in ihrer Funktion als Abdeckung sorgt bei manchen Ausführungsbeispielen für eine glatte und leicht zu reinigende Außenkontur (sog. clean Design) eventuell mit der Möglichkeit designtechnische Merkmale zur Wiedererkennung einer Produktenfamilie oder -reihe darzustellen.

Bei einigen weiteren, nicht dargestellten Ausführungsbeispielen kann die Frontblende auch ausgebildet sein, um eine Mehrzahl von Seiten des Gehäuses zu verschließen, beispielweise kann die Frontblende dazu eine Winkelform aufweisen. Bei einigen weiteren, nicht dargestellten Ausführungsbeispielen kann die Frontblende das Gehäuse auch seitlich, an einer Rückseite, von oben und/oder von unten verschließen

Ferner umfasst die Frontblende 5 an ihrer Innenseite 37 für jede Dosiereinrichtung 2 eine Mehrzahl von Riegeln 49 bis 53, von denen jeder ausgebildet ist, um in einem montierten Zustand in die Ausnehmung 31, welche auch als Schließöffnung bezeichnet werden kann, der Dosiereinrichtung 2 zu greifen. Die Riegel 49 bis 53, welche auch als Fallen bezeichnet werden können, sichern die Dosiereinrichtungen 2 formschlüssig gegen Verdrehung. Jeder der Riegel 49 bis 53 ragt ähnlich einem Türschloss in die Ausnehmung 31 der Dosiereinrichtung 2, welche auch als Schmierleitungsanschluss bezeichnet werden kann. Dadurch wird verhindert, dass die Dosiereinrichtungen 2 sich verdrehen und die Nasen 28 und 29 mit den Nuten 24 und 25 so in Überdeckung kommen können, dass die Dosiereinrichtungen 2 aus den Aufnehmen 17 gleiten können. Die Frontblende 5 übernimmt also auch eine mechanische Sicherungsfunktion. Es erfolgt eine Sicherung gegen Verdrehen und Herausrutschen der Dosiereinrichtungen 2. Mit besonderem Augenmerk auf die Eigenschaften von Kunststoff ist an dem Gehäuse 1 das Konstruktionselement Gewinde nicht eingesetzt, es ist eine kunststoffgerechte Konstruktion umgesetzt. Die Dosiereinrichtungen 2 sind mit einer Bajonettverriegelung in dem Gehäuse 1 eingerastet und haben abhängig von nicht dargestellten Federelementen und einer Spannrampe bei manchen Ausführungsbeispielen eine relativ geringe Selbsthemmung gegen Verdrehung und damit Lösen. Es können jedoch Drehmomente über die nicht dargestellten angeschlossenen Leitungen, beispielsweise Schmierleitung in Folge einer ungünstigen Installation oder von Bewegungen einer Schmierstelle auf die Dosiereinrichtungen 2 wirken.

Um die Frontbelende 5 mit der Gehäuseschale 4 zu verbinden, sind neben den Rastungen in der Frontblende 5 Befestigungslöcher, welche auch als Montagöffnungen 55 und 56 bezeichnet werden können, vorgesehen. Die Gehäuseschale 4 umfasst dazu korrespondierende Montagöffnungen 57 und 58. Die Montagöffnungen 55 und 56, 57 und 58 weisen jeweils einen ovalen Querschnitt auf.

Bei einigen weiteren, nicht dargestellten Ausführungsbeispielen können die Montagöffnungen auch eine andere Form, beispielsweise kreisförmig oder rechteckig aufweisen. Ergänzend oder alternativ kann auch eine andere Anzahl von Montageöffnungen vorgesehen sein. Dabei ist die Montageöffnung 57 zwischen der äußersten Verteilerleitung 12 und der benachbarten Verteilerleitung 13 und der Hauptleitung 10 angeordnet. Die Montageöffnung 58 ist analog zwischen der äußersten Verteilerleitung 16 und der benachbarten Verteilerleitung 15 und der Hauptleitung 10 angeordnet. Die Montagöffnungen 57 und 58 sind als Durchgangsöffnungen ausgebildet, sodass über sie das montierte Gehäuse 1 auch an einer Halterung befestigt werden kann. Dazu können nicht dargestellte Befestigungsmittel durch die Montageöffnungen 55 bis 58 geführt werden. Bei dem Befestigungselement kann es sich beispielweise um eine Schraubverbindung, eine Schraube, einen Nagel, einen Stift und/oder dgl. handeln. Die Halterung kann dabei zum Beispiel ein Bauteil sein, an dem die Vorrichtung oder das Gehäuse für einen Betrieb befestigt wird, beispielsweise ein Gestell, ein Gehäuse einer Maschine und/oder eines Fahrzeugs oder einer extra für das Gehäuse vorgesehene Halterung oder Aufhängung.

Ferner sind an dem Gehäuse 1, welches bei manchen Ausführungsbeispielen auch als Zumessventilgehäuse bezeichnet werden kann, Mittel vorgesehen, die eine Fehlmontage des Gehäuses 1 derart erschweren, dass eine Fehlmontage erkennbar ist. Die Gehäuseschale 4 umfasst dazu in dem Bereich der Montagöffnungen 57 und 58 als Fehlmontaganzeigemittel jeweils eine Nase 59 und 60. Die Nasen 59 und 60 erheben sich jeweils über eine umliegende Fläche. Entsprechend weist die Frontblende 5 im Bereich der Montagöffnungen 55 und 56 Nasenausnehmungen 61 und 62 auf. Diese können als Fehlmontageanzeigemittelaufnahme dienen, in welche die Nasen 59 und 60 in einem montierten Zustand eingreifen bzw. versinken. Dadurch kann die Frontblende 5 trotzdem korrekt an der Gehäuseschale 4 aufliegen. Die Nasen 59 und 60 können beispielweise verhindern oder zumindest die Gefahr reduzieren, dass das Gehäuse 1 ohne Frontbelende 5 montiert wird. Sollte die Gehäuseschale 4 ohne Fronblende 5 montiert werden, findet eine Schraube oder ein Schraubenkopf keine ebene Anlagefläche. Die Schraube wird schräg zu der Bohrung montiert. Damit wird eine Fehlmontage offensichtlich.

Bei einigen weiteren, nicht dargestellten Ausführungsbeispielen können nahe der Montageöffnungen in dem Gehäuse auch andere Fehlmontageanzeigemittel vorgesehen sein, welche ausgebildet sind, um eine Montage des Befestigungselements konzentrisch zu der Montageöffnung zu verhindern. Bei einigen weiteren, nicht dargestellten Ausführungsbeispielen kann das Fehlmontageanzeigemittel auch eine andere Form aufweisen, beispielsweise ein schräge Ebene, die mit einer entsprechenden schrägen Gegenstruktur in der Frontblende in Form einer Gehrung zusammengesetzt werden kann. Fehlmontageanzeigemittel und Fehlmontageanzeigemittelaufnahme können sich in einem montieren Zustand beispielsweise zu einer zylindrischen Befestigungshülse ergänzen.

Manche Ausführungsbeispiele betreffen also ein montierbares Anschlussteil für Rohrverbindungen bzw. Rohranschlüsse in Kunststoffkomponenten, beispielsweise Gehäusen unter besonderer Berücksichtigung einer (misuse-)sicheren und einfachen Anwendung, sowie der Werkstoffeigenschaften (Zugfestigkeit, Scherkräfte) und Gestaltung (Geometrie, Toleranzen) von Kunststoffen. Dadurch kann eventuell eine einfache, schnelle, hydraulisch dichte, druckfeste und Momenten-freie Verbindung einer Schlauchleitung mit einem Gehäuse, beispielsweise einer Pumpe, einem Heizelement, einem Filter oder eines Verteilers mit nur einem montier- und demontierbaren Bauteil (Steckeinsatz), also das Anschlussbauteil ermöglicht werden. Das Anschlussteil kann bei einem Einbringen in eine Kunststoffkomponente, beispielsweise das Gehäuse, "Misuse"-sicher (von engl.: Fehlgebrauch) montiert werden, da weder beim Einbringen noch bei der Nutzung Momente in das Gehäuse, wie bei einer Verschraubung, eingebracht werden. Ferner ist kann das Anschlussteil als Montageteil ausgeführt sein, sodass Sonderverfahren zum Einbringen in den Kunststoff, wie thermische Verfahren, entfallen können. Gleichzeitig kann das Anschlussteil für das anzuschließende Rohr analog zu konventionellen Steckverbinder in der Hydraulik genutzt werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 1: Gehäuse
- 2: Dosiereinrichtung
- 3: Dosierkörper
- 4: Gehäuseschale
- 5: Frontblende
- 6: Zufluss
- 7: Zufluss
- 8: Seitenwand
- 9: Seitenwand
- 10: Hauptleitung
- 11: Boden
- 12: Verteilerleitung
- 13: Verteilerleitung
- 14: Verteilerleitung
- 15: Verteilerleitung
- 16: Verteilerleitung
- 17: Aufnahme
- 18: Zwischenwand
- 19: Deckseite
- 20: Steg
- 21: Steg
- 22: Steg
- 23: Steg
- 24: Öffnung
- 25: Ausnehmung
- 26: Ausnehmung
- 28: Nase
- 29: Nase
- 30: Nut
- 31: Ausnehmung
- 32: Leitungsanschluss
- 33: Schenkel
- 34: Schenkel
- 35: Bogen
- 36: Befestigungsmittel
- 37: Innenseite
- 38: Rastvorsprünge
- 39: Rastvorsprünge
- 40: Rastvorsprünge
- 41: Rastvorsprünge
- 42: Rastvorsprünge
- 43: Rastvorsprünge
- 44: Rastvorsprünge
- 45: Rastöffnung
- 46: Rastöffnung
- 47: Rastöffnung
- 48: Rastöffnung
- 49: Riegel
- 50: Riegel
- 51: Riegel
- 52: Riegel
- 53: Riegel
- 55: Montageöffnung
- 56: Montageöffnung
- 57: Montageöffnung
- 58: Montageöffnung
- 59: Nase
- 60: Nase
- 61: Nasenaufnahme
- 62: Nasenaufnahme
- 100: Verbindungsanordnung
- 101: Bohrung
- 102: Anschlussteil
- 103: Durchgangsbohrung
- 104: hülsenförmiger Abschnitt
- 105: erster Abschnitt
- 106: zweiter Abschnitt
- 107: Mantelfläche
- 108: Haltefläche
- 109: Stirnfläche
- 110: Absatz
- 111: Nut
- 112: Abdichtung
- 113: Wand
- 114: Sicherungsringnut
- 115: Sicherungsring
- 116: Dichtungsaufnahmenut
- 117: Dichtung
- 118: Tasche
- 119: Spalt
- 120: Schulter
- 121: Schenkel
- 122: Schenkel
- 123: Verstärkungsstruktur
- 124: Gewinde
- 125: Verbindungsstück
- 160: Verbindungsanordnung
- 161: Anschlussteil
- 162: Verbindungsstück
- 163: Dichtung
- 164: Dichtung

- M: Drehachse

## Patentansprüche

1. Verbindungsanordnung (100) für eine medienführende Leitung mit folgenden Merkmalen:
einem Gehäuse (1-a) aus einem ersten Material mit wenigstens einer Bohrung (101);
einem Anschlussteil (102), welches zumindest abschnittsweise hülsenförmig ausgebildet ist;
wobei das Anschlussteil (102) aus einem zweiten Material hergestellt ist, welches sich von dem ersten Material unterscheidet; und
wobei das Anschlussteil (102) drehbar in die Bohrung (101) des Gehäuses (1-a) eingesetzt ist, sodass das Gehäuse (1-a) und das Anschlussteil (102) bezüglich des Mediums dichtend verbunden sind.

2. Verbindungsanordnung nach Anspruch 1, wobei das erste Material ein Kunststoff ist.

3. Verbindungsanordnung nach einem der vorhergehenden Ansprüche, wobei das Anschlussteil (102) eine Befestigungsstruktur aufweist, welche ein Gewinde (124), eine Klemmverbindung und/oder eine Steckverbindung ist.

4. Verbindungsanordnung nach Anspruch 3, wobei das Anschlussteil (102) eine Haltefläche (108) aufweist.

5. Verbindungsanordnung nach einem der vorhergehenden Ansprüche, wobei das Gehäuse (1-a) und/oder das Anschlussteil (102) wenigstens einen Axialanschlag (115) aufweist, um das Anschlussteil (102) in axialer Richtung an dem Gehäuse (1-a) zu fixieren.

6. Verbindungsanordnung nach einem der vorhergehenden Ansprüche, ferner umfassend ein Dichtelement (112, 116), das in radialer Richtung zwischen dem Anschlussteil (102) und dem Gehäuse (1-a) angeordnet ist, um das Anschlussteil (102) fluiddicht für das Medium, das durch das Anschlussteil (102) in das Gehäuse (1-a) eingebracht wird, abzudichten.

7. Verbindungsanordnung nach einem der vorhergehenden Ansprüche, wobei das Gehäuse (1-a) eine Tasche (118) aufweist, welche ausgebildet ist, um das Anschlussteil (102) zumindest teilweise in axialer Richtung zu überlappen.

8. Verbindungsanordnung nach einem der vorhergehenden Ansprüche, wobei an die Bohrung (103) des Gehäuses (1-a) eine zweite Leitung (10-a) anschließt, welche einstückig mit dem Gehäuse (1-a) hergestellt ist.

9. Verbindungsanordnung nach einem der vorhergehenden Ansprüche, wobei das Gehäuse (1-a) ausgebildet ist für eine Vorrichtung zum dosierten Verteilen eines Schmiermediums.

10. Verfahren (170) zum Verbinden einer medienführenden Leitung mit den folgenden Merkmalen:
Drehbares und fluiddichtes Anordnen (170) des Anschlussteils (102), welches wenigstens abschnittsweise hülsenförmig ausgebildet ist, in einer Bohrung (103) eines Gehäuses (1-a) aus einem ersten Material, wobei das Anschlussteil (102) aus einem zweiten Material hergestellt ist, welches sich von dem ersten Material unterscheidet.
